# EUROPÄISCHE PATENTSCHRIFT

(11) **EP 1 449 747 B1**
(45) Veröffentlichungstag und Bekanntmachung des Hinweises auf die Patenterteilung: **16.08.2006**
(21) Anmeldenummer: 04003921.6
(22) Anmeldetag: 20.02.2004
(51) Int. Cl.: B62D 25/04, B62D 21/09, B60R 22/24

(54) **Verstärkung an der C-Säule eines Kraftfahrzeugs**
Reinforcement means in the region of the C-pillar of a vehicle body
Structure de renfort au niveau du montant "C" d'un véhicule automobile

(30) Priorität: 22.02.2003 DE 10307635
(43) Veröffentlichungstag der Anmeldung: 25.08.2004
(73) Patentinhaber: ADAM OPEL AG, 65423 Rüsselsheim (DE)
(72) Erfinder: Gehannin, Christophe, 65191 Wiesbaden (DE); Mildeberger, Bernd, 55218 Ingelheim (DE)

(56) Entgegenhaltungen:
- US-A- 5 863 071
- US-A- 6 086 100
- PATENT ABSTRACTS OF JAPAN Bd. 2003, Nr. 03, 5. Mai 2003 (2003-05-05) & JP 2002 337736 A (NISSAN MOTOR CO LTD), 27. November 2002 (2002-11-27)
- PATENT ABSTRACTS OF JAPAN Bd. 1996, Nr. 11, 29. November 1996 (1996-11-29) & JP 8 175424 A (NISSAN MOTOR CO LTD), 9. Juli 1996 (1996-07-09)

## Beschreibung

Die Erfindung betrifft eine Verstärkung an der C-Säule eines Kraftfahrzeugs.

Es ist bekannt, im unteren Bereich der C-Säule eines Kraftfahrzeugs oberhalb des Radgehäuses Verstärkungsprofile zu befestigen. Diese Verstärkungsprofile tragen Arretierungspins zur Arretierung und Abstützung der Rückenlehnen. Die Arretierungspins müssen hierbei so stabil ausgebildet sein, dass ein Schutz der Insassen vor der Ladung im Kofferraum eines Kraftfahrzeugs bei einem Unfall gewährleistet ist.

Die bisher verwendeten Verstärkungsprofile weisen hierbei eine Reihe von Nachteilen auf. Es handelt sich um U-förmige Verstärkungsprofile, die aus zwei im Tiefziehverfahren geformten Blechen zusammengesetzt sind. Seitlich zum Heck des Fahrzeugs weisend ist am Verstärkungsprofil eine Trägerplatte angeschweißt, an der der Arretierungspin befestigt ist. Es handelt sich somit um vier Bauteile, was einen erheblichen Montageaufwand bedeutet.

Die zum Heck des Kraftfahrzeugs weisende Trägerplatte überdeckt zum Teil die Aufnahmeöffnung für den Gurtaufroller oberhalb des Radgehäuses, wodurch der Einbau des Gurtaufrollers erschwert ist, da der Werker hinter der Trägerplatte blind montieren muss.

Ein weiterer Nachteil besteht darin, dass das Verstärkungsprofil seitlich von der Aufnahmeöffnung des Gurtaufrollers angeordnet sein muss, um den Einbau des Gurtaufrollers zu ermöglichen. Das Verstärkungsprofil ist hierdurch nicht in einer Linie mit der C-Säule angeordnet, sondern seitlich versetzt zur C-Säule angeschweißt. Diese Anordnung schwächt die Struktur im gesamten C-Säulen-Bereich. Zudem wird durch das seitliche Befestigen der Trägerplatte am Verstärkungsprofil eine nur unzureichende Stabilität der Befestigung des Arretierungspins erreicht, da die Trägerplatte nur einseitig abgestützt ist.

Vor diesem Hintergrund ist die Aufgabe der vorliegenden Erfindung, eine Verstärkung an der C-Säule eines Kraftfahrzeugs zu schaffen, die eine leichte Montage des Gurtaufrollers ermöglicht, die strukturelle Stabilität im Bereich der C-Säule eines Kraftfahrzeugs verbessert sowie eine sichere und stabile Befestigung der Arretierungspins für die Rückenlehne des Kraftfahrzeugs ermöglicht. Es soll zudem eine höhere Flexibilität bei der Befestigung von zusätzlichen Bauteilen an der Verstärkung erreicht werden.

Erreicht wird dies durch eine Verstärkung an der C-Säule eines Kraftfahrzeugs gemäß Patentanspruch 1.

Als Verstärkung an der C-Säule ist ein Verstärkungsrahmen in der Verlängerung der C-Säule auf dem Radgehäuse angeordnet, wobei der Verstärkungsrahmen eine Durchbrechung zu Aufnahme eines Gurtaufrollers aufweist.

Durch die Anordnung des Verstärkungsrahmens in der Verlängerung der C-Säule wird erreicht, dass die Struktursteifigkeit im C-Säulenbereich deutlich verbessert ist. Der Verstärkungsrahmen verbindet strukturell die C-Säulen-Verstärkungen mit den Querträger-Verstärkungen, wodurch gemeinsam mit den Dachverstärkungs-Streben ein stabiler Strukturring entsteht.

Die Durchbrechung zu Aufnahme eines Gurtaufrollers ist beispielsweise mittig in dem Verstärkungsrahmen angeordnet. Der Werker kann somit den Gurtaufroller bequem durch die Durchbrechung in Position bringen und mit der Karosserie verschrauben.

Auf dem Verstärkungsrahmen ist eine Trägerplatte lösbar befestigt. Diese Trägerplatte wird erst nach Einbau des Gurtaufrollers am Verstärkungsrahmen zweckmäßigerweise vor der Durchbrechung montiert und behindert somit nicht den Montagevorgang. Auch die Montage der Trägerplatte am Verstärkungsrahmen ist auf Grund der leichten Zugänglichkeit des Verstärkungsrahmens ohne Mühe durchführbar. Im Gegensatz zu der aus dem Stand der Technik bekannten nur einseitig an einem Verstärkungsprofil angeschweißten Trägerplatte kann bei der Erfindung die Trägerplatte beidseitig auf dem Verstärkungsrahmen an beliebigen Punkten befestigt werden. Die Befestigung der Trägerplatte ist somit in ihrer Stabilität wesentlich verbessert.

Auf der Trägerplatte ist vorteilhafterweise ein Arretierungspin zur Arretierung der Rückenlehnen des Kraftfahrzeugs befestigt. Durch die verbesserte Stabilität bei der Befestigung der Trägerplatte ist auch der Arretierungspin deutlich besser über die Trägerplatte und den Verstärkungsrahmen mit der Fahrzeug-Karosserie verbunden. Die Fixierung der Rückenlehnen und somit der Schutz vor der Ladung im Kofferraum des Kraftfahrzeuges im Falle eines Unfalls ist somit ebenfalls verbessert.

Zudem handelt es sich um eine sehr flexible Lösung, da die Trägerplatte variabel den jeweiligen Anforderungen entsprechend ausgestaltet werden kann. So weist die Trägerplatte in einer vorteilhaften Ausgestaltung der Erfindung Aufnahmen für die Befestigung einer Laderaumabdeckung auf. Die Trägerplatte kann also neben dem Arretierungspin weitere Befestigungsorgane aufnehmen. Ein weiteres Beispiel sind Befestigungspunkte für ein Kofferraumfangnetz. Durch die lösbare Befestigung der Trägerplatte an dem Verstärkungsrahmen ist auch ein späterer Austausch der Trägerplatte möglich.

Der Verstärkungsrahmen besteht zweckmäßigerweise aus gefaltetem Blech. Der Verstärkungsrahmen kann so als ein Bauteil gefertigt werden, wodurch der Montageaufwand reduziert werden kann.

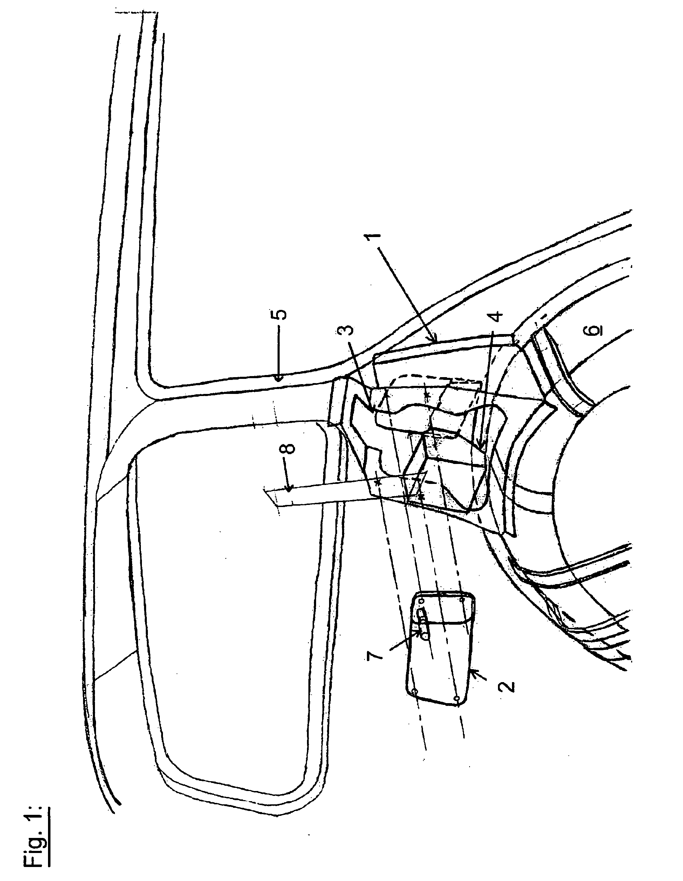

Ein Ausführungsbeispiel der Erfindung ist nachstehend anhand von Zeichnungen näher beschrieben. Es zeigen
- Fig. 1: den erfindungsgemäßen Verstärkungsrahmen 1 vor der Montage des Gurtaufrollers und der Trägerplatte;

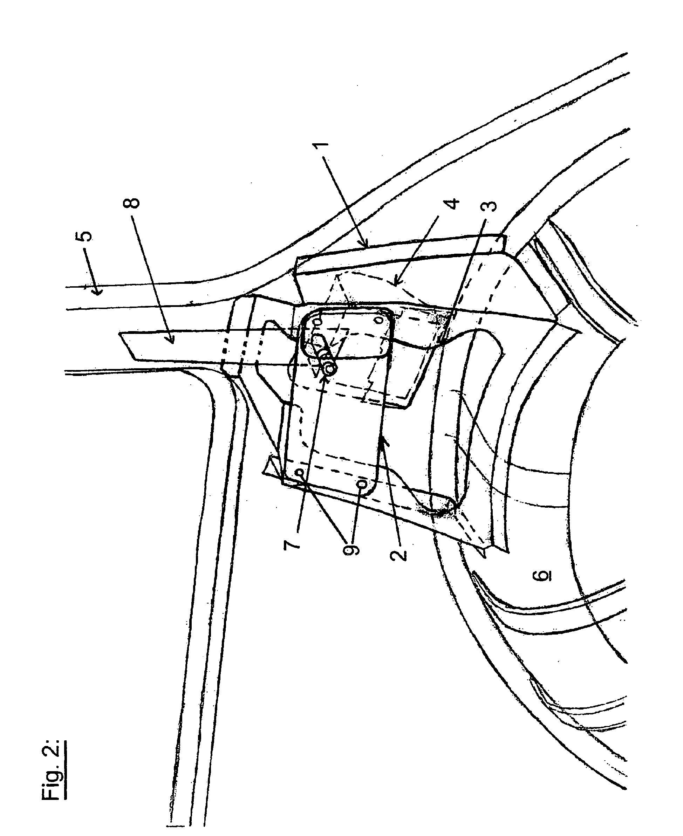

- Fig. 2: den Verstärkungsrahmen 1 mit montiertem Gurtaufroller 4 und befestigter Trägerplatte 2.

Der Verstärkungsrahmen 1 ist in Verlängerung der C-Säule 5 an dieser und dem Radgehäuse 6 angeschweißt. Der Verstärkungsrahmen 1 weist hierbei eine Durchbrechung 3 auf, durch welche der Gurtaufroller 4 in seine Befestigungsposition an der C-Säule 5 des Kraftfahrzeugs eingesetzt werden kann. Der Gurtaufroller 4 kann hierbei ohne Mühe eingesetzt und durch die ausreichend weite Durchbrechung 3 mit der Karosserie verschraubt werden. In dem oberen in etwa horizontalen Abschnitt des Verstärkungsrahmens 1 ist die Durchbrechung 3 so ausgebildet, das der Sicherheitsgurt 8 in der Durchbrechung 3 geführt ist.

Die Trägerplatte 2 wird erst nach Montage des Gurtaufrollers 4 auf dem Verstärkungsrahmen 1 mit vier Befestigungspunkten 9 auf dem Verstärkungsrahmen 1 befestigt. Die Trägerplatte 2 überdeckt hierbei zum Teil die Durchbrechung 3 im Verstärkungsrahmen 1. Die Trägerplatte 2 ist an zwei Kanten am Verstärkungsrahmen 1 befestigt, wodurch eine wesentlich stabilere Konstruktion als die aus dem Stand der Technik bekannte erreicht ist.

Auf der Trägerplatte 2 ist der Arretierungspin 7 befestigt, im Ausführungsbeispiel verschraubt. In dem dargestellten Ausführungsbeispiel werden hierfür die selben Befestigungspunkte verwendet, an denen eine Kannte der Trägerplatte 2 auf dem Verstärkungsrahmen 1 befestigt ist. Dies reduziert wiederum den Montageaufwand.

Resultierend aus der verbesserten Stabilität der Trägerplattenbefestigung ist auch der Arretierungspin 7 steifer mit der Karosserie verbunden. Dies verbessert die Fixierung der Rückenlehnen und somit den Schutz der Fahrzeuginsassen vor im Falle eines Unfalls gegen die Rückenlehnen drückende Ladung.

### Bezugszeichenliste

| | |
|---|---|
| Verstärkungsrahmen | (1) |
| Trägerplatte | (2) |
| Durchbrechung | (3) |
| Gurtaufroller | (4) |
| C-Säule | (5) |
| Radgehäuses | (6) |
| Arretierungspin | (7) |
| Sicherheitsgurt | (8) |
| Befestigungspunkte | (9) |

## Patentansprüche

1. Verstärkung an der C-Säule (5) eines Kraftfahrzeugs, wobei ein Verstärkungsrahmen (1) in der Verlängerung der C-Säule (5) auf dem Radgehäuse (6) angeordnet ist, **dadurch gekennzeichnet, dass** der Verstärkungsrahmen (1) eine Durchbrechung (3) zur Aufnahme eines Gurtaufrollers (4) aufweist.

2. Verstärkung an der C-Säule eines Kraftfahrzeugs nach Anspruch 1, **dadurch gekennzeichnet, dass** an dem Verstärkungsrahmen (1) eine Trägerplatte (2) lösbar befestigt ist.

3. Verstärkung an der C-Säule eines Kraftfahrzeugs nach mindestens einem der vorangegangenen Ansprüche, **dadurch gekennzeichnet, dass** die Trägerplatte (2) vor der Durchbrechung (3) angeschraubt ist.

4. Verstärkung an der C-Säule eines Kraftfahrzeugs nach mindestens einem der vorangegangenen Ansprüche, **dadurch gekennzeichnet, dass** der Verstärkungsrahmen (1) aus gefaltetem Blech besteht.

5. Verstärkung an der C-Säule eines Kraftfahrzeugs nach mindestens einem der vorangegangenen Ansprüche, **dadurch gekennzeichnet, dass** ein Arretierungspin (7) zur Arretierung der Rückenlehnen des Kraftfahrzeugs an der Trägerplatte (2) befestigt ist.

6. Verstärkung an der C-Säule nach mindestens einem der vorangegangenen Ansprüche, **dadurch gekennzeichnet, dass** die Trägerplatte (2) Aufnahmen für die Befestigung einer Laderaumabdeckung aufweist.

7. Verstärkung an der C-Säule nach mindestens einem der vorangegangenen Ansprüche, **dadurch gekennzeichnet, dass** die Trägerplatte (2) Aufnahmen für die Befestigung eines Fangnetzes aufweist.

8. Verstärkung an der C-Säule eines Kraftfahrzeugs nach mindestens einem der vorangegangenen Ansprüche, **dadurch gekennzeichnet, dass** der Verstärkungsrahmen (1) eine Durchbrechung zur Führung des Sicherheitsgurtes (8) aufweist.

## Claims

1. Reinforcement on the C-column (5) of a motor vehicle, wherein a reinforcing frame (1) is arranged on the wheel casing (6) in the extension of the C-column (5), **characterised in that** the reinforcing frame (1) has an opening (3) to receive a belt retractor (4).

2. Reinforcement on the C-column of a motor vehicle according to Claim 1, **characterised in that** a support plate (2) is detachably fastened to the reinforcing frame (1).

3. Reinforcement on the C-column of a motor vehicle according to at least one of the preceding claims, **characterised in that** the support plate (2) is bolted on in front of the opening (3).

4. Reinforcement on the C-column of a motor vehicle according to at least one of the preceding claims, **characterised in that** the reinforcing frame (1) is made of folded sheet metal.

5. Reinforcement on the C-column of a motor vehicle according to at least one of the preceding claims, **characterised in that** a locking pin (7) for locking the seat backs of the motor vehicle is fastened to the support plate (2).

6. Reinforcement on the C-column according to at least one of the preceding claims, **characterised in that** the support plate (2) has seatings for fastening a load area cover.

7. Reinforcement on the C-column according to at least one of the preceding claims, **characterised in that** the support plate (2) has seatings for fastening a retaining net.

8. Reinforcement on the C-column of a motor vehicle according to at least one of the preceding claims, **characterised in that** the reinforcing frame (1) has an opening for guidance of the safety belt (8).

## Revendications

1. Renfort d'un montant C (5) d'un véhicule automobile, dans lequel un cadre (1) de renfort est agencé dans le prolongement du montant (5) sur le chapeau (6) de roue, **caractérisé en ce que** le cadre (1) de renfort présente un évidement (3) pour y loger un enrouleur (4) de ceinture.

2. Renfort sur le montant C d'un véhicule automobile selon la revendication 1, **caractérisé en ce qu'**une plaque-support (2) démontable est fixée sur le cadre (1) de renfort.

3. Renfort sur le montant C d'un véhicule automobile selon au moins l'une des revendications précédentes, **caractérisé en ce que** la plaque-support (2) est vissée devant l'évidement (3).

4. Renfort sur le montant C d'un véhicule automobile selon au moins l'une des revendications précédentes, **caractérisé en ce que** le cadre (1) de renfort est en tôle pliée.

5. Renfort sur le montant C d'un véhicule automobile selon au moins l'une des revendications précédentes, **caractérisé en ce qu'**une broche (7) d'arrêt destinée à arrêter les dossiers du véhicule automobile est fixée sur la plaque-support (2).

6. Renfort sur le montant C selon au moins l'une des revendications précédentes, **caractérisé en ce que** la plaque-support (2) présente des logements pour y fixer une protection d'espace de chargement.

7. Renfort sur le montant C d'un véhicule automobile selon au moins l'une des revendications précédentes, **caractérisé en ce que** la plaque-support (2) présente des logements pour y fixer un filet de retenue.

8. Renfort sur le montant C d'un véhicule automobile selon au moins l'une des revendications précédentes, **caractérisé en ce que** le cadre (1) de renfort présente un évidement pour passer la ceinture (8) de sécurité.
